# EUROPEAN PATENT APPLICATION

(11) **EP 1 335 307 A2**
(43) Date of publication of application: **13.08.2003**
(21) Application number: 03250640.4
(22) Date of filing: 31.01.2003
(51) Int. Cl.: G06F 17/30

(54) **System and method for positioning records in a database**

(30) Priority: 01.02.2002 US 61512
(71) Applicant: Micro Data Base Systems, Inc., West Lafayette, Indiana 47906-0438 (US)
(72) Inventor: Hoggart, Dana L., West Lafayette, Indiana 47906 (US)
(74) Representative: Holmes, Matthew Peter

(57) **Abstract**

In accordance with the present invention, a system and method for positioning data in a database is provided which employs coarsening a graph representing the data in order to reduce the computational complexity of determining an efficient partitioning. In certain object-oriented databases embodying the present invention, for example, a graph is constructed in which each object corresponds to a vertex, and the affinities of pairs of objects correspond to edges. The affinities are assigned based on a combination of predefined access types associated with collection and statistical data regarding actual access patterns. Simpler graphs are then iteratively produced by collapsing pairs of vertices into single vertices in the successive graphs until a graph of the desired simplicity is constructed; this graph is then partitioned, producing a rough partitioning of the objects, which can then be refined.

## Description

### BACKGROUND OF THE INVENTION

The present invention relates generally to databases, and more particularly to the positioning of records within the database on the storage media.

Databases typically belong to one of two major classes: object-oriented and relational. In an object-oriented database, an object typically consists of a unique object identifier (OID), coupled with a variable-sized block of bytes. In relational databases, data is typically stored in blocks of fixed sizes. For the purposes of this document, the term "block" of data is not meant to refer specifically either to an object in an object-oriented database or a record in a relational database, unless otherwise specified. Regardless of the type of database, it is a critical function of the database to position the data on the persistent storage media, and to track the position of the data and retrieve it when required for database processing.

Those skilled in the art will know that retrieving data from persistent memory media is an expensive operation, and that it is preferable, other things being equal, to have data stored in volatile memory. However, it will likewise be known to those skilled in the art that it is impracticable or impossible to provide hardware with adequate volatile memory to store all data in a database, and that design objectives other than speed, including stability and robustness, typically require that data be stored on persistent memory media.

Therefore, typically, databases copy data from persistent memory media to volatile memory when needed for database processing and when it is not already there. They then retain the data in volatile memory for some time after the specific function that required the access to the persistent memory has been completed. This enables the databases to employ the data in subsequent functions which might also require the data without need for a new retrieval from the persistent memory media.

As will also be known to those skilled in the art, the resources expended to complete retrieval from the persistent memory media are not highly dependent on the volume of the data to be retrieved. In particular, multiple blocks of data are typically stored together on "pages," and retrieval operations typically transfer data from persistent memory to volatile memory on a page-by-page basis. Thus, when data is retrieved from the persistent memory media, it is typically efficient to retrieve substantially more data than what is strictly required for the specific function requiring the data. One reason this may be efficient is that it permits additional data to be copied into volatile memory, increasing the chance that a future retrieval may be done from volatile, rather than persistent, memory.

The ability of a database to retrieve "extra" data from the persistent memory media is dependent upon the positioning of that extra data on the storage media relative to the data prompting the retrieval. Consequently, any decision about what extra data will be retrieved as part of a retrieval of a given block of data from persistent memory typically must be made when the data is written to persistent memory. For example, since data is typically retrieved from persistent memory on a page-by-page basis, the decision about which page upon which to place a block will typically determine the other data that will be retrieved when the block is copied to volatile memory. Conversely, the decision about where to position the block also effects which other data blocks will, when copied into volatile memory, cause the block also to be copied. Overall database efficiency, therefore, will be affected by the method used to cluster blocks of data on the persistent memory media.

One approach to clustering blocks of data is to collect data regarding the relationship between the times when a given block of data is required during database processing relative to the times when other blocks of data are required; when a block of data is found often to be needed shortly before or after another, both are positioned together on the persistent memory media, so that they will be retrieved together during a single retrieval process. An obvious shortcoming of this approach is that it assumes that access patterns within the database are essentially homogeneous over time―an assumption that is frequently invalid. Another shortcoming is that it is an extremely expensive operation to collect this data. Yet another shortcoming is that it cannot provide information about how to cluster new blocks of data, since these blocks must exist and be accessed before any data about their access patterns can be collected.

Thus, there is a need for a database which employs a method of positioning data on the persistent memory media which increases the probability that when a given block is needed for database processing it will have already been copied into volatile memory as part of a prior retrieval operation, which can avoid being confounded when access patterns in the database fluctuate dramatically over time, which can reduce or eliminate the need for the collection of empirical data regarding access patterns, and which can make informed decisions about how to cluster new data blocks at the time they are created. The present invention is directed toward meeting these needs.

### SUMMARY OF THE INVENTION

A first method for positioning data in a database according to the present invention comprises constructing a base graph in which a plurality of data blocks in the database each correspond to one of a plurality of vertices, and in which at least one affinity between objects corresponds to at least one edge. The method further comprises constructing a simpler graph, the graph comprising a plurality of final vertices, each corresponding to at least two of the vertices from the base graph, and at least one final edge corresponding to at least one of the edges in the base graph. The method further comprises selecting a simple partition for the simpler graph, and determining a final partition for the data in the database from the simple partition of the simpler graph.

A second method for positioning data in a database according to the present invention comprises constructing a base graph in which a plurality of data blocks in the database each correspond to one of a plurality of vertices, and in which at least one affinity between objects corresponds to at least one edge, the base graph is a weighted graph having weights of edges corresponding to affinities of data blocks of data. The method further comprises constructing a simpler graph, the graph comprising a plurality of final vertices, each corresponding to at least two of the vertices from the base graph and at least one final edge corresponding to at least one of the edges in the base graph, wherein the simpler graph is a weighted graph having edges with weights corresponding to weights of edges in the base graph. The method further comprises selecting a simple partition for the simpler graph and determining a penultimate partition for the base graph in which a given parent vertex in the base graph is in a group with every other parent vertex to each daughter vertex which is in the same group with a daughter vertex in the simpler graph to the given parent vertex. The method further comprises determining a rough distribution of the data blocks in which a given data block is positioned on the a page with each data block with which the given data block shares an adjacent edge, unless that edge is cut in the penultimate partition. The method further comprises refining the rough distribution by moving at least one data block from the page on which it was positioned during the determining a rough distribution of the data blocks.

A method of positioning a first new data block of data on a page according to the present invention comprises buffering the first new data block in server memory. The method further comprises selecting a page containing data blocks having a high collective affinity for the first new data block. The method further comprises determining whether the collective affinity of the data blocks on the selected page for the first new data block exceeds a preselected value. The method further comprises positioning the first new data block on the selected page if the collective affinity of the data blocks on the selected page exceed the preselected value. The method further comprises positioning the first new data block on a new page if the collective affinity of the data blocks on the selected page do not exceed the preselected value.

A method for assigning a weight to an edge of a weighted graph corresponding to data blocks in a database according to the present invention comprises using information from the database about explicit connections between at least one pair of data blocks, the at least one pair of data blocks corresponding to at least one pair of vertices of the weighted graph.

A method for assigning at least one weight to at least one edge of a weighted graph corresponding to data blocks in a database according to the present invention comprises providing a schema of the database defining at least one collection. The method further comprises selecting at least one derived access type from a predefined set for the at least one collection of the schema of the database. The method further comprises assigning at least one weight to at least one edge corresponding to at least one relationship between data blocks comprising the collection, the at least one relationship being defined by the derived access type.

A third method for positioning data in a database according to the present invention comprises providing a schema of the database defining a first and second collection and at least one predefined set of derived access types. The method further comprises constructing a weighted base graph in which a plurality of data blocks in the database each correspond to one of a plurality of vertices, and in which at least one affinity between objects corresponds to at least one edge. The constructing a weighted base graph comprises collecting statistical data on access patterns of a plurality of data blocks associated with the first collection, selecting from the predefined set the derived access type most closely matching the statistical data, and assigning at least one weight to at least one edge corresponding to at least one relationship between data blocks associated with the second collection, the at least one relationship being defined by the derived access type. The method further comprises constructing one or more intermediate graphs, each intermediate graph being a subsequent graph to one from which it is constructed and being a prior graph to a graph constructed from it. Each intermediate graph comprises a plurality of new vertices corresponding to pairs of vertices from the previous graph and at least one new edge corresponding to at least one edge adjacent to one of the vertices in the pair of vertices corresponding to the new vertex adjacent to the at least one new edge. The method further comprises constructing a weighted simpler graph from one of the intermediate graphs. The simpler graph comprises a plurality of final vertices, each corresponding to at least one of the vertices from the base graph and at least one final edge corresponding to at least one of the edges in the base graph. The method further comprises selecting a simple partition for the simpler graph and determining a penultimate partition for the base graph in which a given parent vertex in the base graph is in a group with every other parent vertex to each daughter vertex which is in the same group with a daughter vertex in the simpler graph to the given parent vertex. The method further comprises determining a rough distribution of the data blocks in which a given data block is positioned on the a page with each data block with which the given data block shares an adjacent edge, unless that edge is cut in the penultimate partition. The method further comprises refining the rough distribution by moving at least one data block from the page on which it was positioned during the determining a rough distribution of the data blocks.

One object of the present invention is to provide a method of clustering data blocks which decreases the total number of retrieval operations from persistent memory media required during database operation. Other objects and advantages of the present invention will be apparent from the following description.

### BRIEF DESCRIPTION OF THE DRAWINGS

FIG. 1 is a block diagram of certain elements of a network suitable for employing a database embodying the present invention.
FIG. 2 is a flowchart illustrating certain elements of a method according to the present invention.
FIG. 3a is a portion of an exemplary graph representing data blocks in a database to be repositioned by a method according to the present invention.
FIG. 3b is a portion of a subsequent graph constructed from the graph of FIG. 3.
FIG. 4 is a schematic diagram of an access type for use in a system or method according to the present invention.
FIG. 5 is a schematic diagram of an access type for use in a system or method according to the present invention.
FIG. 6 is a schematic diagram of an access type for use in a system or method according to the present invention.
FIG. 7 is a schematic diagram of an access type for use in a system or method according to the present invention.

### DESCRIPTION OF THE PREFERRED EMBODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended. Any alterations and further modifications in the described processes, systems, or devices, and any further applications of the principles of the invention as described herein are contemplated as would normally occur to one skilled in the art to which the invention relates. In particular, throughout this description, the invention will be described in the context of an object oriented database. It is nevertheless contemplated that the invention can be applied to other types of databases, such as relational databases, with adaptations that will be apparent to those skilled in the art.

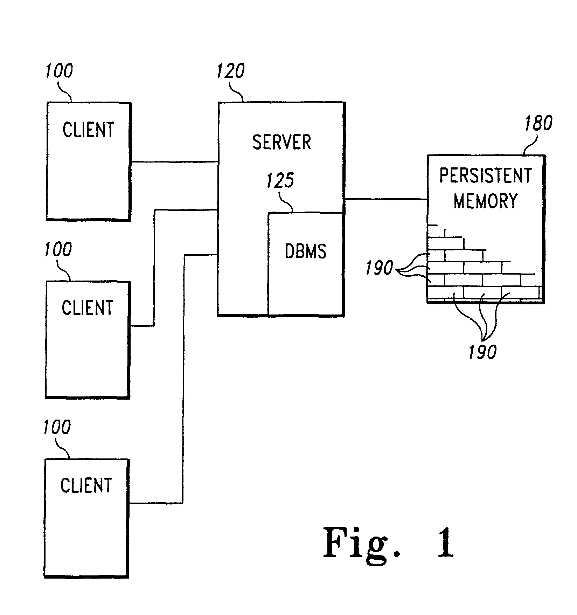

FIG. 1 is a block diagram showing certain elements of a database on which the preferred embodiment method may be used to re-cluster data blocks. Clients 100 communicate with server 120, which comprises a database management system ("DBMS") 125. The DBMS is preferably object oriented, and the data blocks are preferably objects. The server 120 has access to persistent memory devices 180 for storing data. Persistent memory devices 180 are divided into pages 190. Individual objects are stored in pages 190. Although some objects may be larger than what can be stored on a single page 190, and therefore may occupy multiple pages 190, typically a large portion of the objects are smaller than what can be stored on a single page 190. Typically, such smaller objects are stored on pages holding one or more other objects.

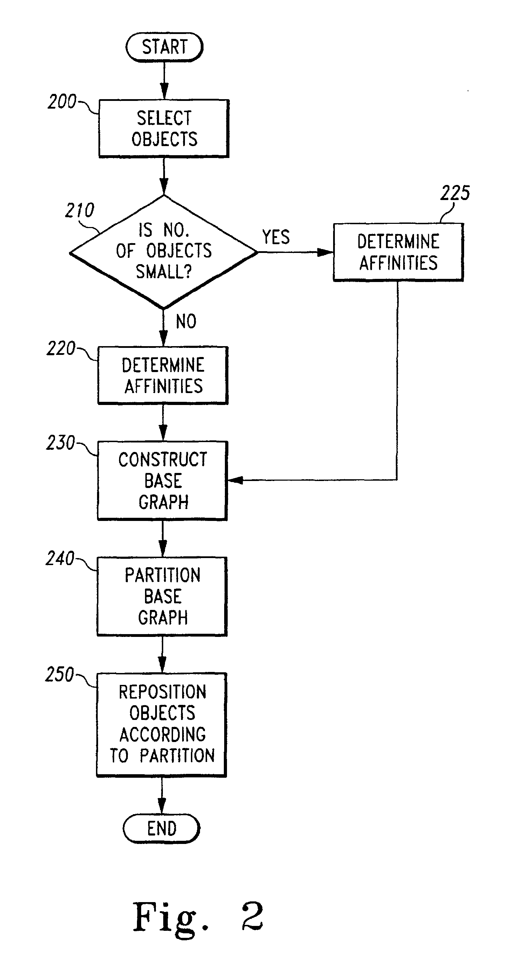

FIG. 2 illustrates certain elements of a method for positioning objects on pages according to the present invention. This method can advantageously be implemented in the form of a DBMS programmed to perform it. The process begins with selecting objects for repositioning at 200. Which objects are selected, and how many are selected, may be influenced by a number of factors, as further discussed herein. The number selected may be anywhere from a single object to the entire set of objects in the database. The number selected is then used at 210 to select one of two general strategies for determining affinities for the objects selected. In cases in which the number of objects selected for repositioning is large, at 220 affinities are then determined for each selected object relative to the other selected objects. In those cases where the number of objects selected at 200 is relatively small, affinities will be determined at 225 for each selected object, in turn, relative to any of the objects, selected or unselected. The affinities between the objects at either 220 or 225 are determined from relationships between the objects by one or more of a number of different approaches, as discussed further herein. Once affinities have been determined at 220 or 225, a base graph representing the objects and their relationships is constructed at 230. (Because the base graph is often constructed based on data pertaining to the access patterns of the blocks, as discussed in greater detail hereinbelow, it is sometimes referred to as an access graph.) The base graph is then partitioned at 240. Depending on the number of objects selected at 200, and which approaches were used for determining affinities, the graph may be sufficiently complex so that it becomes preferable to employ multilevel graph partitioning. Once the base graph is partitioned, at 250 the objects are repositioned on pages according to that partition.

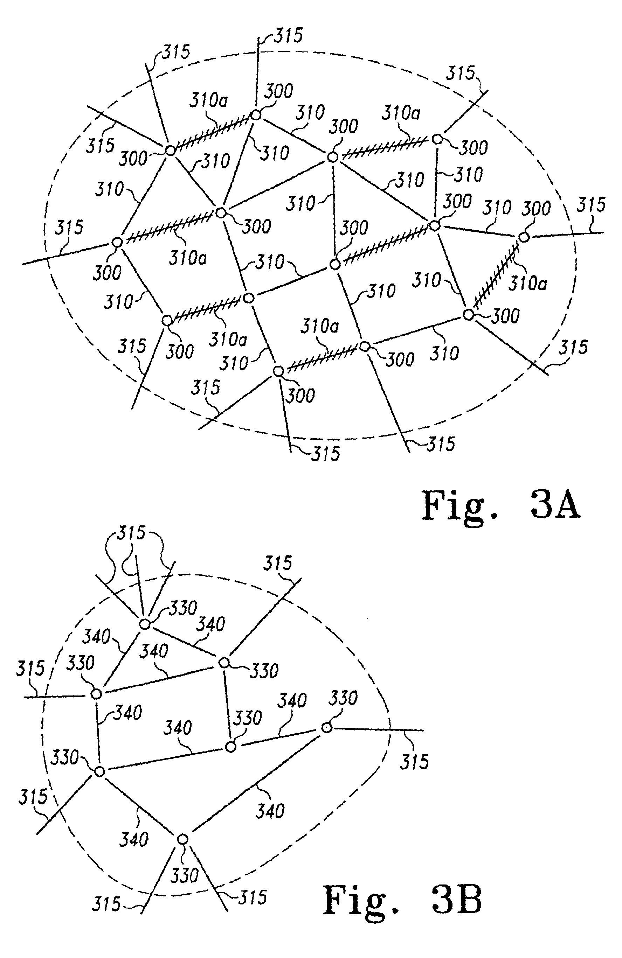

In order to understand the reasons it may be advantageous to select different numbers of objects for partitioning it is useful to begin by considering the means by which the base graph is constructed and partitioned. FIG. 3 shows a portion of a base graph constructed to represent the objects. Each vertex 300 corresponds to a single object. Vertices that are connected to each other by chains of adjacent uncut edges and vertices are called groups. Within this document, two objects are called "adjacent," relative to a given graph, if they correspond with two vertices of that graph that share a common adjacent edge 310. Each edge 310 in FIG. 3 corresponds to the "affinity" of the two adjacent objects for each other. The "affinity" of one object for another is a relationship that indicates something about the likelihood that, if one of them is needed, the other will be needed shortly before or thereafter. The affinities may be determined by one or more of a number of different methods, as discussed further herein.

In the preferred embodiment, the base graph is a weighted graph, in which the weights of edges are assigned according to one or more quantifications of the affinity of the adjacent objects. Alternatively, the base graph can be an unweighted graph, in which the affinities are simply used to determine if two objects will be made adjacent in the base graph. In the preferred embodiment, each vertex of the base graph is also assigned a size, corresponding to the number of bytes contained by the corresponding object. In certain alternative embodiments, each vertex is assigned a size based on other criteria.

Once the base graph is constructed, it is partitioned. Depending upon the number of objects initially selected for re-clustering, and upon whether a weighted base graph is being used, generating a relatively high-quality partition may be very costly in database resources. In those situations in which the cost of calculating a relatively high-quality partition is expected to be high, a multilevel partitioning technique is advantageously employed to reduce the cost. In these cases, a simpler graph is generated by an iterative collapsing process, which creates a series of intermediate graphs, each subsequent graph constructed from the prior graph, culminating in a simpler graph having final vertices and edges. In the preferred embodiment, pairs of adjacent vertices in one graph are collapsed into a single vertex of the subsequent graph. In these embodiments, vertices are assigned to another adjacent vertex to form pairs. The common adjacent edge of each of these pairs of vertices is then eliminated. All other edges are initially retained, but then each set of edges that is adjacent to a common pair of vertices is collapsed into a single new edge.

FIGs. 3a and 3b illustrate this collapsing process. Collapsing edges 310a are adjacent to pairs of vertices 300, and each vertex 300 is adjacent to at most one collapsing edge 310a. Each pair of vertices 300 becomes a single vertex 330, and a new edge 340 connects each pair of vertices 330 that was formed from adjacent non-collapsing vertices 310. Note that certain vertices 300 may be next to no collapsing edges 310a. Such vertices will be "collapsed" into a vertex in the subsequent graph by themselves. In certain embodiments in which the base graph is a weighted graph, the weights of the new edges 340 equals the sum of the weights of the edges 310 which were collapsed into them. In those embodiments in which the vertices of the base graph are assigned a size, the size of the resulting vertex is preferably set to the sum of the sizes of the vertices collapsed into it. For the purposes of this document, vertices of a graph that are collapsed into a vertex of any subsequent graph are called "parent vertices" of the vertices into which they are collapsed, regardless of how many "generations" apart they are―that is, each vertex is the parent to exactly one vertex in each subsequent graph in the series. Each vertex in any of the graphs is called a "daughter" to each vertex that is a parent vertex to it. Likewise, each edge has exactly one "daughter edge" in each subsequent graph, and at least one "parent edge" in each prior graph.

As will be readily apparent to those skilled in the art, the simpler graph can be constructed by other means. For example, the vertices of the subsequent graphs could be constructed by collapsing more than two vertices at a time into a single daughter vertex.

The collapsing process is repeated until a graph is produced which is simple enough for the server to calculate a relatively high-quality, simple partition using an acceptable amount processor time. Those persons of ordinary skill in the art will recognize that the processor time necessary to calculating a relatively high-quality partition grows rapidly as the number of vertices and edges in the graph increase. A given partition is generally higher quality than another if, all other things being equal, the sum of the weights of all the edges cut is lower. A given partition is also generally higher quality if, all other things being equal, the total size of each group of vertices is more similar to the size of each other such group of vertices. In those embodiments in which the vertices of the base graph are given sizes, the size of a group is equal to the sum of the sizes of the vertices included in it; otherwise, the size of a group is typically simply equal to the number of included vertices.

It will also be apparent to those skilled in the art that both the quality of the partition and the processing resources required will be strongly influenced by the method used to select vertices 300 for collapse. One advantageous means of selecting collapse edges 310a in a weighted graph is to prefer those edges having a high weight, for example, by employing a variant of Luby's algorithm in which edges are chosen instead of vertices, and in which weights are used instead of randomly assigned numbers.

Once the simpler graph has been partitioned, a final partition for the base graph can be constructed from it, for example by simply assigning every parent vertex of any vertex in a group of the simpler graph to a common group in the base graph. In certain preferred embodiments, the base graph is partitioned by projecting the partition of the simpler graph back down through intermediate graphs. Preferably, these intermediate graphs are the same intermediate graphs that were generated during the process of generating the simpler graph. The partition can be successively improved during this refinement process over a direct projection by selecting edge cuts superior to a simple projection, for example by dividing the parent vertices of a vertex adjacent to a cut edge between the two groups separated by that edge cut. Examples of methods that can advantageously be used for this purpose include Kernighan-Lin type heuristics and the Greedy Refinement algorithm.

In certain embodiments, the initial base graph is constructed to represent all of the objects in the database. In other embodiments, only a portion of the objects is selected to be represented. In a certain embodiment, for example, sets of objects are selected for representation in base graphs by performing the operation starting with a base graph representing all the objects in the database. In this way, an initial coarse partition is performed for all the objects in the database, and then the objects are more finely partitioned by repeating the process for the individual groups of objects defined by the coarse partition. Depending on the size of the database and the size of the pages, the partition may be further refined by repeating the process, each time constructing additional base graphs from the objects in the groups defined by previous, coarser partitions. Preferably, the process is repeated until a partition is created in which the groups are small enough to fit onto individual pages.

In certain other embodiments, sets of objects are selected for representation in the base graph by other means. For example, in certain embodiments, all the objects presently stored on a selected set of pages are selected to be represented in the base graph.

In certain other embodiments, the process of creating a simpler graph can be omitted. A base graph can be created with a partition corresponding directly to the present clustering of the objects on a set of pages, and then this partition can be adjusted by one of the methods used for improving partitions during the refinement process, such as the Kernighan-Lin type heuristics and the Greedy Refinement algorithm, mentioned above. As will be apparent to those skilled in the art, the size of the set of pages selected will determine the amount of resources that will be consumed by the re-clustering operation. Therefore, the size of the set selected is preferably influenced by such factors as whether, and for how long, the database can be offline. Other factors familiar to those skilled in the art will also effect how many objects, and which objects, may be advantageously selected for a particular re-clustering operation. For example, in certain embodiments unused pages that presently reside in the server buffer pool are selected for reclustering.

In certain other embodiments, individual objects, or small sets of objects, can be selected for one-at-a-time re-clustering. In certain embodiments, this method is used to spot-cluster new objects. When a new object is created in a database employing one of these embodiments, it is buffered in server memory until a page is selected having a high collective affinity for the new object, at which point it can be given that page assignment. If the collective affinity for the new object to all the existing pages is relatively low, it can instead be assigned to a new page. When multiple objects are created concurrently, it could be inferred that they have a strong relationship with each other. They may therefore be assigned a common page, or given a relatively strong affinity for each other so that they will tend to be clustered together.

In certain embodiments, objects selected for one-at-a-time re-clustering may not be positioned on the page calculated to have the highest affinity. For example, it may aid overall clustering if page loading is also monitored and considered in page assignments, since this may increase the likelihood space will be available on a page when other objects having an even higher affinity are reclustered. Thus, one factor influencing what constitutes a relatively high or low collective affinity may be a function of the page loading.

It will be apparent to those skilled in the art that these techniques can be used in any combination in a single database. Various of these techniques may be suited for different circumstances. For example, re-clustering operations which are more demanding of database resources will typically be more suited for use while the database is offline, or online during periods of relatively low demand. Likewise, certain operations may be more efficiently performed under certain circumstances. For example, as already mentioned, data already stored in volatile memory as a result of normal database processing can be more rapidly manipulated for re-clustering. It is contemplated that the data base management system will be programmed to select different of these techniques from time to time in order to provide the best quality of overall clustering while interfering as little as possible with ordinary database functioning.

It will be appreciated by those skilled in the art that the quality of the final partition created by any of these methods will be heavily dependent on the quality of the method used to assign affinities to the objects. Various methods may be used, depending on the theoretical information a developer may have about how the data is likely to be used, empirical data about how the data is used in fact, and the resources available for collecting such empirical data.

In certain embodiments, at least some of the affinities can be assigned by an application developer, the database developer, or both, as a trait of one or more objects assigned when the object is created.

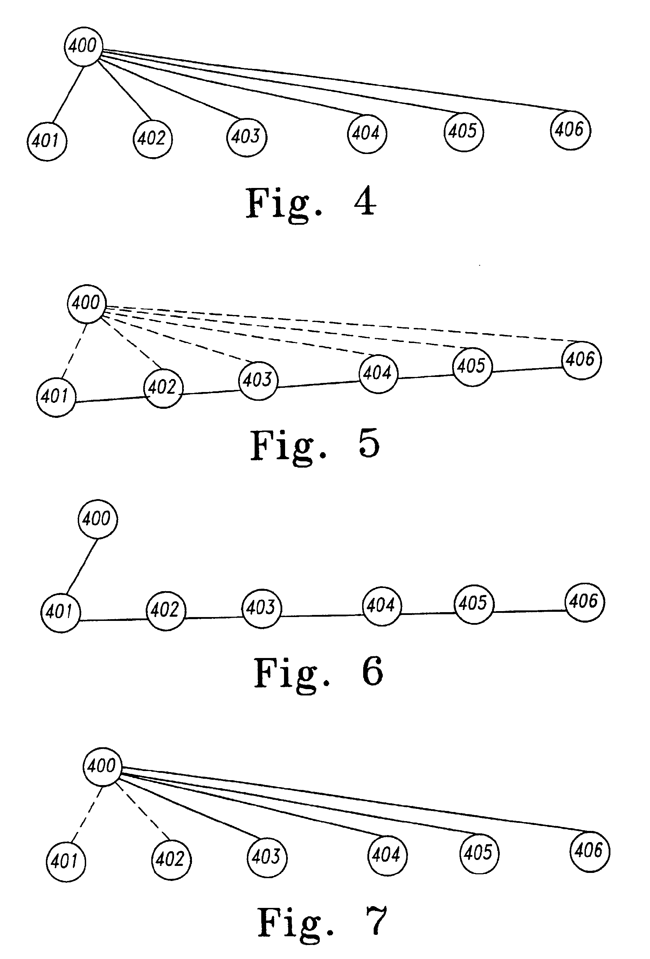

In certain of these embodiments, at least some of the affinities are assigned by an application developer, the database developer, or both, by assigning an access type to a group of objects defining a larger relationship between them. The assigned application types may provide affinities for objects created during development, or they may provide affinities for objects created during processing of the application. FIGs. 4-7 illustrate certain possible assigned access types in the form of weighted graphs. The weights are graphically illustrated (darker lines illustrate higher weights), and correspond to the affinities between the objects assigned the respective access types. FIG. 4 illustrates a simple access type, which might correspond, for example, to customer and invoice objects in a database used by a business to track orders. In this access type, when the customer object 400 is needed, one of the invoice objects 401-406 is frequently needed near the same time, but generally only one of them, and with no particular one more likely than another to be needed. In FIG. 5, an access type is illustrated for the same customer object 400 and invoice objects 401-406 in which queries of subsets of invoices using a forward sequential scan are the most common operation. In this access type, a given invoice object is still frequently required shortly after the associated customer object 400 is required, but even more often after the preceding invoice object. FIG. 6 illustrates an access type in which the most common operation is a complete traversal of all invoice objects 401-406 for a given customer. FIG. 7 illustrates an access type in which single invoice objects are typically queried, and in which more recent ones are more frequently queried than older ones―for example, because they are more frequently outstanding.

Assigned access types may provide affinities for objects created during runtime of an application, for example by being described in the process that causes them to be created. Likewise, access types may cause affinities to be adjusted over time. For example, the addition of new objects in a collection might cause an access type to reduce the affinities of existing blocks in that collection. In this way, a database employing a method according to the present invention can track anticipated access patterns on a set-by-set basis. In certain embodiments, anticipated access patterns comprise extended schema information. For example, in certain of these embodiments, anticipated access patterns are defined in the database schema as elements of the collections, relations, or extents, or any combination of these.

In certain embodiments, the affinities are determined through explicit relationships between the blocks. For example, in an object-oriented database, the schema defines extents, relationships, and collections, all of which describe potential connections between objects. A traversal algorithm can be used to select affinities for objects based on these definitions. This method is particularly suited for use in constructing unweighted base graphs.

In certain embodiments, the affinities are determined through empirical data. In these embodiments, the database collects data on the times when objects are needed in relation to the times when other objects are needed. The more frequently two objects are needed near the same time, the stronger the affinity.

In certain embodiments the amount of statistical data necessary to accurately determine affinities is greatly reduced by restricting the domain of objects for which data is gathered. In certain of these embodiments, for example, data is collected for only a relatively small portion of a large group of objects having a common relationship to one or more other objects. Consider again, for example, a database containing information on the customers and invoices for a particular business. Data could be collected only for a small number of invoices for a given customer, and the results generalized to the remainder of that customer's invoices. Alternatively, the results of data on all the invoices of a given customer could be generalized to the remainder of the invoices of all customers. Another alternative would be to generalize the results to certain subsets of all remaining invoices, based on other criteria, such as date or dollar value.

This method of reducing the number of objects for which statistical data needs to be collected can advantageously be combined with assigned access types. For example, in the database containing customer invoice objects described above, the relationship between the customer objects and the invoice objects could be described by an access type. Data could be collected on the access pattern of a relatively small set of customer objects and their associated invoice objects, and the results generalized to all sets of customer objects and associated invoice objects.

In certain other embodiments, the amount of statistical data necessary to accurately determine affinities is reduced by using derived access types. In these embodiments, the range of outcomes is restricted according to a pre-selected set. For example, a number of access patterns for groups of objects might be anticipated by an application developer, but it might not be clear which one will in fact turn out to be the correct one. Or, it might be that access patterns will vary from time to time, or from one sub-group to another. Consider again the example of a database containing customer objects and invoice objects. It might turn out that, for one customer, the most common query of its invoices is a complete traversal of all its invoices, corresponding to an access type illustrated in FIG. 6. For other customers, it might turn out that more recent invoices are processed more frequently than older ones, corresponding to the access type illustrated in FIG. 7. The invoices of other customers might have access patterns corresponding to other different but foreseeable access types. The amount of statistical data necessary to identify which access type most closely describes the actual access pattern for a set of related objects is much less than what is necessary to produce a statistically significant model ex nihilo. Thus, by combining theoretical information an application developer has regarding the ways the application is likely to be used and empirical data about how particular objects are being processed, accurate affinities for objects can be determined with a relatively small expenditure of resources for the collection of statistical data.

Other means of combining these methods for determining affinities can be used, and will be apparent to those skilled in the art. It is contemplated that a database will be programmed to exploit a plurality of these means, alone, in combination, or both. Preferably, the database will also be programmed to select which means to use based on various factors relating to the operation of the database, including such things as scheduled downtime and the load (both average and present) on the database resources during runtime.

While the invention has been illustrated and described in detail in the drawings and foregoing description, the same is to be considered as illustrative and not restrictive in character, it being understood that only the preferred embodiment, and certain alternative embodiments deemed helpful in further illuminating the preferred embodiment, have been shown and described and that all changes and modifications that come within the spirit of the invention are desired to be protected.

## Claims

1. A method for positioning data in a database, comprising:
constructing a base graph in which a plurality of data blocks in the database correspond to respective ones of a plurality of vertices, and in which at least one affinity between objects corresponds to at least one edge; and
constructing a simpler graph, comprising:
a plurality of final vertices, each corresponding to at least two of the vertices from the base graph; and
at least one final edge corresponding to at least one of the edges in the base graph; and
selecting a simple partition for the simpler graph; and
determining a final partition for the data in the database from the simple partition of the simpler graph.

2. The method of claim 1, wherein the base graph and simpler graph are weighted graphs, and wherein the weight of a given edge corresponds to the affinities of the data blocks corresponding to the vertices adjacent the given edge.

3. The method of claim 1, wherein the simpler graph is constructed by constructing one or more intermediate graphs, each intermediate graph being a subsequent graph to one from which it is constructed and being a prior graph to a graph constructed from it, each intermediate graph comprising:
a plurality of new vertices corresponding to pairs of vertices from the previous graph; and
at least one new edge corresponding to at least one edge adjacent to one of the vertices in the pair of vertices corresponding to the new vertex adjacent to the at least one new edge; and
wherein the simpler graph is constructed from one of the one or more intermediate graphs.

4. The method of claim 3, wherein the base graph and simpler graph are weighted graphs, and wherein the weight of an edge corresponds to the affinities of the data blocks corresponding to the vertices adjacent the given edge.

5. The method of claim 1, wherein the determining a final partition for the data in the database from the simple partition of the simpler graph comprises:
determining a penultimate partition for the base graph wherein each group comprises every parent vertex to any daughter vertex in the simpler graph if the group comprises at least one parent vertex to that daughter vertex; and
determining a rough distribution of the data blocks in which a given data block is positioned on a page with each data block with which the given data block shares an adjacent edge, unless that edge is cut in the penultimate partition; and
refining the rough distribution by moving at least one data block from the page on which it was positioned during the determining a rough distribution of the data blocks.

6. The method of claim 1, wherein every data block of data in the database corresponds to a vertex in the base graph.

7. The method of claim 1, wherein fewer than every data block of data in the database correspond to a vertex in the base graph.

8. A method for positioning data in a database, comprising:
constructing a base graph in which a plurality of data blocks in the database each correspond to one of a plurality of vertices, wherein the base graph is a weighted graph having weights of edges corresponding to affinities of data blocks of data; and
constructing a simpler graph, comprising:
a plurality of final vertices, each corresponding to at least two of the vertices from the base graph; and
at least one final edge corresponding to at least one of the edges in the base graph; and
wherein the simpler graph is a weighted graph having edges with weights corresponding to weights of edges in the base graph;
selecting a simple partition for the simpler graph; and determining a penultimate partition for the base graph wherein each group comprises every parent vertex to any daughter vertex in the simpler graph if the group comprises at least one parent vertex to that daughter vertex; and
determining a rough distribution of the data blocks in which a given data block is positioned on the a page with each data block with which the given data block shares an adjacent edge, unless that edge is cut in the penultimate partition; and
refining the rough distribution by moving at least one data block from the page on which it was positioned during the determining a rough distribution of the data blocks.

9. The method of claim 8, wherein every data block of data in the database corresponds to a vertex in the base graph.

10. The method of claim 8, wherein fewer than every data block of data in the database correspond to a vertex in the base graph.

11. A method of positioning a first new data block of data on a page, comprising:
buffering the first new data block in server memory; and
selecting a page containing data blocks having a high collective affinity for the first new data block; and
determining whether the collective affinity of the data blocks on the selected page for the first new data block exceeds a preselected value; and
positioning the first new data block on the selected page if the collective affinity of the data blocks on the selected page exceed the preselected value; and
positioning the first new data block on a new page if the collective affinity of the data blocks on the selected page do not exceed the preselected value.

12. The method of claim 11, wherein additional new data blocks created at the same time as the first new data block are positioned on the same page as the first new data block.

13. A method for assigning a weight to an edge of a weighted graph corresponding to data blocks in a database, the method comprising using information from the database about explicit connections between at least one pair of data blocks, the at least one pair of data blocks corresponding to at least one pair of vertices of the weighted graph.

14. The method of claim 13, wherein the information comprises extents, relationships, and collections defined by a schema of the database.

15. The method of claim 13, wherein the information is defined by a traversal algorithm.

16. A method for assigning a weight to an edge of a weighted graph corresponding to data blocks in a database, the method comprising using statistical information regarding the patterns of past accesses of data blocks.

17. The method of claim 16, wherein the statistical information is used to select an access type from a pre-defined set, the access type defining the weight.

18. A method for assigning a weight to an edge of a weighted graph corresponding to data blocks in a database, the method comprising using information provided by an application developer.

19. The method of claim 18, further comprising:
providing a schema of the database defining a pre-assigned access type for at least one collection; and
wherein the using information provided by an application developer comprises assigning the at least one weight to the at least one edge corresponding to at least one relationship between data blocks comprising the collection, the at least one relationship being defined by the pre-assigned access type.

20. The method of claim 18, wherein the using information provided by an application developer comprises:
selecting at least one derived access type from a predefined set for each of the collections of the schema of the database; and
assigning at least one weight to at least one edge corresponding to at least one relationship between data blocks comprising the collection, the at least one relationship being defined by the derived access type.

21. The method of claim 20, wherein the selecting at least one derived access type comprises:
collecting statistical data on access patterns of a plurality of data blocks;
selecting from the predefined set the derived access type most closely matching the statistical data.

22. A method for assigning at least one weight to at least one edge of a weighted graph corresponding to data blocks in a database, the method comprising:
providing a schema of the database defining at least one collection; and
selecting at least one derived access type from a predefined set for the at least one collection of the schema of the database; and
assigning at least one weight to at least one edge corresponding to at least one relationship between data blocks comprising the collection, the at least one relationship being defined by the derived access type.

23. The method of claim 22, wherein the selecting at least one derived access type comprises:
collecting statistical data on access patterns of a plurality of data blocks;
selecting from the predefined set the derived access type most closely matching the statistical data.

24. The method of claim 23, wherein the at least one weight is assigned to at least one edge which is adjacent only to vertices corresponding to data blocks having access patterns for which no data was collected.

25. A method for positioning data in a database, comprising:
constructing a weighted base graph in which a plurality of data blocks in the database each correspond to one of a plurality of vertices, and in which at least one affinity between objects corresponds to at least one edge; and
constructing a weighted simpler graph, comprising:
a plurality of final vertices, each corresponding to at least two of the vertices from the base graph; and
at least one final edge corresponding to at least one of the edges in the base graph; and
selecting a simple partition for the simpler graph; and
determining a final partition for the data in the database from the simple partition of the simpler graph; and
wherein at least one weight of at least one edge is assigned using information from the database about explicit connections between at least one pair of data blocks, the at least one pair of data blocks corresponding to at least one pair of vertices of the weighted base graph.

26. The method of claim 25, wherein the information comprises extents, relationships, and collections defined by a schema of the database.

27. The method of claim 25, wherein the information is defined by a traversal algorithm.

28. A method for positioning data in a database, comprising:
constructing a weighted base graph in which a plurality of data blocks in the database each correspond to one of a plurality of vertices, and in which at least one affinity between objects corresponds to at least one edge; and
constructing a weighted simpler graph, comprising:
a plurality of final vertices, each corresponding to at least two of the vertices from the base graph; and
at least one final edge corresponding to at least one of the edges in the base graph; and
selecting a simple partition for the simpler graph; and determining a final partition for the data in the database from the simple
partition of the simpler graph; and
wherein at least one weight of at least one edge is assigned using statistical information regarding the patterns of past accesses of data blocks.

29. The method of claim 28, wherein the statistical information is used to select an access type from a pre-defined set, the access type defining the weight.

30. A method for positioning data in a database, comprising:
constructing a weighted base graph in which a plurality of data blocks in the database each correspond to one of a plurality of vertices, and in which at least one affinity between objects corresponds to at least one edge; and
constructing a weighted simpler graph, comprising:
a plurality of final vertices, each corresponding to at least two of the vertices from the base graph; and
at least one final edge corresponding to at least one of the edges in the base graph; and
selecting a simple partition for the simpler graph; and
determining a final partition for the data in the database from the simple partition of the simpler graph; and
wherein at least one weight of at least one edge is assigned using information provided by an application developer.

31. The method of claim 30, further comprising:
providing a schema of the database defining a pre-assigned access type for at least one collection; and
assigning the at least one weight to the at least one edge corresponding to at least one relationship between data blocks comprising the collection, the at least one relationship being defined by the pre-assigned access type.

32. The method of claim 30, further comprising:
selecting at least one derived access type from a predefined set; and
assigning the at least one weight to the at least one edge corresponding to at least one relationship between data blocks comprising the collection, the at least one relationship being defined by the derived access type.

33. The method of claim 32, wherein the selecting at least one derived access type comprises:
collecting statistical data on access patterns of a plurality of data blocks;
selecting from the predefined set the derived access type most closely matching the statistical data.

34. A method for positioning data in a database, comprising:
providing a schema of the database defining at least one collection and at least one predefined set of derived access types; and
constructing a weighted base graph in which a plurality of data blocks in the database each correspond to one of a plurality of vertices, and in which at least one affinity between objects corresponds to at least one edge, the constructing comprising:
selecting at least one derived access type from the predefined set for the at least one collection of the schema of the database; and
assigning at least one weight to at least one edge corresponding to at least one relationship between data blocks comprising the collection, the at least one relationship being defined by the derived access type; and
constructing a weighted simpler graph, comprising:
a plurality of final vertices, each corresponding to at least two of the vertices from the base graph; and
at least one final edge corresponding to at least one of the edges in the base graph; and
selecting a simple partition for the simpler graph; and
determining a final partition for the data in the database from the simple partition of the simpler graph.

35. The method of claim 34, wherein the selecting at least one derived access type comprises:
collecting statistical data on access patterns of a plurality of data blocks; and
selecting from the predefined set the derived access type most closely matching the statistical data.

36. The method of claim 35, wherein the at least one weight is assigned to at least one edge which is adjacent only to vertices corresponding to data blocks having access patterns for which no data was collected.

37. The method of claim 35, wherein the simpler graph is constructed by constructing one or more intermediate graphs, each intermediate graph being a subsequent graph to one from which it is constructed and being a prior graph to a graph constructed from it, each intermediate graph comprising:
a plurality of new vertices corresponding to pairs of vertices from the previous graph; and
at least one new edge corresponding to at least one edge adjacent to one of the vertices in the pair of vertices corresponding to the new vertex adjacent to the at least one new edge; and
wherein the simpler graph is constructed from one of the one or more intermediate graphs.

38. The method of claim 35, wherein the determining a final partition for the data in the database from the simple partition of the simpler graph comprises:
determining a penultimate partition for the base graph wherein each group comprises every parent vertex to any daughter vertex in the simpler graph if the group comprises at least one parent vertex to that daughter vertex; and
determining a rough distribution of the data blocks in which a given data block is positioned on the a page with each data block with which the given data block shares an adjacent edge, unless that edge is cut in the penultimate partition; and
refining the rough distribution by moving at least one data block from the page on which it was positioned during the determining a rough distribution of the data blocks.

39. A method for positioning data in a database, comprising:
providing a schema of the database defining a first and second collection and at least one predefined set of derived access types; and
constructing a weighted base graph in which a plurality of data blocks in the database each correspond to one of a plurality of vertices, and in which at least one affinity between objects corresponds to at least one edge, the constructing comprising:
collecting statistical data on access patterns of a plurality of data blocks associated with the first collection; and
selecting from the predefined set the derived access type most closely matching the statistical data; and
assigning at least one weight to at least one edge corresponding to at least one relationship between data blocks associated with the second collection, the at least one relationship being defined by the derived access type; and
constructing one or more intermediate graphs, each intermediate graph being a subsequent graph to one from which it is constructed and being a prior graph to a graph constructed from it, each intermediate graph comprising:
a plurality of new vertices corresponding to pairs of vertices from the previous graph; and
at least one new edge corresponding to at least one edge adjacent to one of the vertices in the pair of vertices corresponding to the new vertex adjacent to the at least one new edge; and
constructing a weighted simpler graph from one of the intermediate graphs, the simpler graph comprising:
a plurality of final vertices, each corresponding to at least one of the vertices from the base graph; and
at least one final edge corresponding to at least one of the edges in the base graph; and
selecting a simple partition for the simpler graph; and
determining a penultimate partition for the base graph wherein each group comprises every parent vertex to any daughter vertex in the simpler graph if the group comprises at least one parent vertex to that daughter vertex; and
determining a rough distribution of the data blocks in which a given data block is positioned on the a page with each data block with which the given data block shares an adjacent edge, unless that edge is cut in the penultimate partition; and
refining the rough distribution by moving at least one data block from the page on which it was positioned during the determining a rough distribution of the data blocks.

40. The method of claim 39, further comprising:
buffering a first new data block in server memory; and
selecting a page containing data blocks having a high collective affinity for the first new data block; and
determining whether the collective affinity of the data blocks on the selected page for the first new data block exceeds a preselected value; and
positioning the first new data block on the selected page if the collective affinity of the data blocks on the selected page exceed the preselected value; and
positioning the first new data block on a new page if the collective affinity of the data blocks on the selected page do not exceed the preselected value.

41. The method of claim 40, wherein additional new data blocks created at the same time as the first new data block are positioned on the same page as the first new data block.

42. A method of positioning a first new data block of data on a page, comprising:
buffering the first new data block in server memory;
selecting a page containing data blocks having a high collective affinity for the first new data block; and
positioning the first new data block the page containing data blocks having a high collective affinity for the first new data block.

43. The method of claim 42, wherein additional new data blocks created at the same time as the first new data block are assigned relatively high affinities for one another.
